(19) Europäisches Patentamt / European Patent Office / Office européen des brevets

(11) **EP 3 727 982 B1**

(12) **EUROPEAN PATENT SPECIFICATION**

(45) Date of publication and mention of the grant of the patent:
**17.04.2024 Bulletin 2024/16**

(21) Application number: **18811860.8**

(22) Date of filing: **10.12.2018**

(51) International Patent Classification (IPC):
*B60W 50/02* (2012.01)  *F16H 57/04* (2010.01)
*B60L 3/00* (2019.01)  *F16N 13/06* (2006.01)
*F01M 1/02* (2006.01)  *F16H 61/12* (2010.01)

(52) Cooperative Patent Classification (CPC):
**F16H 57/0436; B60L 3/0038; F01M 1/02; F16H 61/12;** B60W 2050/0215; F01M 2001/0215; F01M 2250/60; F16H 2061/1212; F16H 2061/1284; F16N 2013/063

(86) International application number:
**PCT/EP2018/084110**

(87) International publication number:
**WO 2019/121088 (27.06.2019 Gazette 2019/26)**

(54) **METHOD FOR CONTROLLING CORRECT OPERATION OF A VEHICLE**

VERFAHREN ZUR ÜBERWACHUNG DES KORREKTEN BETRIEBS EINES FAHRZEUGS

PROCÉDÉ DE SURVEILLANCE DU FONCTIONNEMENT CORRECT D'UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2017 IT 201700148458**

(43) Date of publication of application:
**28.10.2020 Bulletin 2020/44**

(73) Proprietor: **VHIT S.p.A.**
**26010 Offanengo (IT)**

(72) Inventors:
• **FAUDA, Alessandro**
**24047 TREVIGLIO (BG) (IT)**
• **CADEDDU, Leonardo**
**26013 Crema (IT)**

(74) Representative: **Monelli, Alberto**
**Bugnion S.p.A.**
**Largo Michele Novaro 1/A**
**43121 Parma (IT)**

(56) References cited:
**EP-A1- 0 663 520**  **EP-A1- 3 139 068**
**DE-A1-102005 048 015**  **FR-A1- 2 945 481**
**JP-A- H04 252 776**  **JP-A- 2004 112 982**
**JP-A- 2013 013 286**

EP 3 727 982 B1

**Description**

The present invention relates to a method for controlling correct operation of a vehicle, in particular correct operation of vehicle sensors.

Vehicles provided with a plurality of sensors of various kinds and forms and electronic control units are known. Many of these sensors may be of the same type and be in large numbers: thermocouples, pressure gauges, viscosimeters, flowmeters, speedometers, etc.

In fact, in some applications, in order to prevent incorrect data from being supplied, a same parameter is determined in a redundant manner by a plurality of sensors. In a first known solution, if the data supplied by the two sensors does not coincide an anomaly is signalled. In a second known solution, if the data is measured by an odd number of independent sensors, the sensor takes into consideration the data supplied by the majority of the sensors.

One drawback of this solution is associated with the fact that the redundant use of the sensors which provide the same information involves a significant cost. This solution should therefore be used only for those situations where it is actually needed.

In this context, the technical task underlying the present invention is to propose a method for controlling correct operation of a vehicle which allows the costs to be optimized. EP0663520, EP3139068, JP2004112982 disclose a known control method for the correct operation of a vehicle.

EP0663520 discloses a method for validating the output of a sensor used to monitor an operating parameter of a vehicle engine, the method comprising the steps of monitoring at least two other parameters, deriving from said at least two other parameters an expected value of the sensor output, comparing the expected value of the sensor output with the actual value of the sensor output, and generating an error signal in dependence on the comparison of the expected and the actual values. Said error signal can be generated if said expected and actual values differ by more than a predetermined amount.

The technical task mentioned and the objects specified are achieved by a method for controlling correct operation of a vehicle as defined in independent claim 1. Preferred embodiments are defined in the dependent claims.

Further characteristic features and advantages of the present invention will emerge more clearly from the indicative - and therefore not limiting - description of a preferred, but not exclusive embodiment of a method for controlling correct operation of a vehicle, as illustrated in the attached drawings in which:

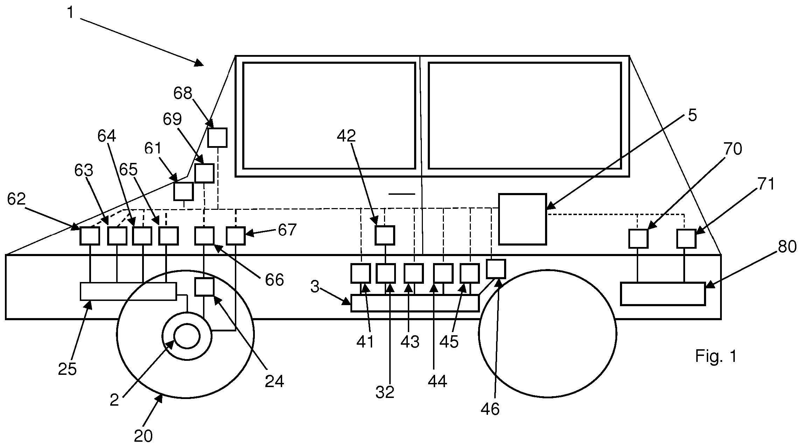

- Fig. 1 shows a schematic view of a vehicle which implements the method according to the present invention;
- Figure 2 shows a further schematic view of a detail of the vehicle shown in Figure 1;
- Figure 3 shows a thermal model of a portion of a vehicle which implements the method according to the present invention.

The present invention relates to a method for controlling correct operation of a vehicle 1. This method may be implemented by the vehicle 1 upon start-up or at any other moment during operation. Said method may be activated when requested by the user or may be carried out periodically or when a predetermined situation arises. Such a method comprises the step of measuring a first group of parameters by means of physical sensors which define a first set of sensors. These parameters therefore allow the correct operation of the vehicle 1, or in any case a part thereof, to be monitored.

The apparatus 1 comprises an engine 2. It also comprises movement means 20, for example driving wheels and a transmission shaft for transmitting the movement to the wheels or to a propeller of a boat, etc. The engine 2 is preferably an engine for driving the movement means 20 of the vehicle. The engine could be an electric motor (in this case the axis connected to the electric motor is known by the commercial name of eAxle), but it could also be an internal-combustion engine. In the case of an electric motor 2 it conveniently comprises an inverter 25.

The engine 2 is also provided with an electronic control system 24.

The apparatus 1 also comprises means 23 for transmission of the movement generated by the engine 2. These transmission means 23 may comprise for example kinematic mechanisms which help ensure the transmission of the movement from the engine 2 to mechanical actuators (for example the wheels of a vehicle in the case of a motor car).

The vehicle 1 comprises the first set of sensors. The vehicle 1 (in particular a control unit 5) implements a procedure comprising the steps of:

    i) calculating a first parameter of the first group depending on at least the remaining parameters of the first group (in the preferred version the first parameter is calculated exclusively depending on the remaining parameters of the first group); conveniently this occurs in a predefined number of standard operating conditions of the vehicle, said conditions being assessed during development of the vehicle/engine system;

    ii) assessing the deviation between a value of the first parameter calculated in step i) and a value of the first parameter measured in said step and measuring said first group of parameters by means of the physical sensors;

The method/procedure also comprises the step of detecting an anomaly if said deviation exceeds a pre-set value. This deviation may have an absolute or relative value. This deviation may be fixed for a given parameter or variable depending on the operating mode. The anomaly may be signalled directly to a user present inside the passenger compartment, but in addition or alternatively could be indicated to memory means which record this information so as to make it available for a maintenance centre (which remains invisible to the user).

In this way it is possible to check whether a physical sensor provides incorrect information. At the same time it is possible to obtain a double check without using redundant sensors which would involve a major cost (or in any case limiting the use of redundant sensors only for a certain number of parameters).

Conveniently the procedure is implemented at least twice, each time identifying as a first parameter a different parameter of the first group. In this way it is possible to test a plurality of sensors.

Preferably the method comprises the step of implementing the procedure at least a number of times equal to the number of parameters of the first group in such a way that each parameter of the first group becomes the first parameter. In other words, each time a different parameter of the first group is identified as first parameter.

In the preferred solution each parameter of the first group is measured by means of a corresponding sensor. The number of sensors of the first set is therefore equal to the number of parameters of the first group.

The procedure described above may be repeated iteratively each time identifying a different parameter of the first group as first parameter. Therefore the repetitions are performed one after another. Alternatively, the procedure may be implemented several times, simultaneously using each time as a first parameter a different parameter of the first group.

It is pointed out that in the present description the word "sensor" is understood as being a synonym of "measuring device".

In addition to a motor and transmission means for transmitting the motion generated, the vehicle 1 comprises:

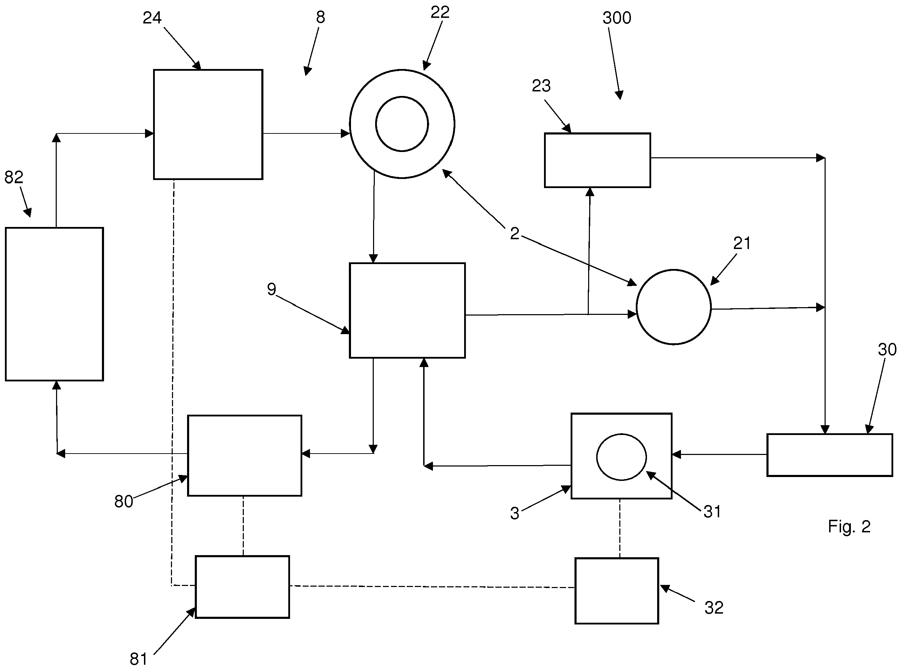

- a first electro-pump 3;
- a lubricating liquid tank 30 from where the first circulation electro-pump 3 draws the lubricating liquid; it is shown in the schematic view of Figure 2. The lubricating liquid is recirculated into the tank 30 after it has performed its lubricating action on the engine 2 and/or on the transmission means 23. This tank 30 is conventionally called an "oil sump".

The first electro-pump 3 is an electro-pump for circulating a lubricating liquid. As indicated above, the liquid lubricates the engine 2 and/or the transmission means 23.

The lubricating liquid is normally oil. The first electro-pump 3 is typically a volumetric pump, in particular a rotary volumetric pump. The first electro-pump 3 comprises a rotor 31 which moves the lubricating liquid. The first electro-pump 3 comprises control electronics 32. Typically these control electronics 32 are located physically on the first electro-pump 3.

The apparatus 1 further comprises a second electro-pump 80 which regulates the circulation of a cooling fluid. This cooling fluid removes heat from the lubrication liquid and from specific portions of the apparatus 1. In Figure 2 the reference number 81 denotes an electronic control unit of said second electro-pump 80.

The physical sensors of the first set comprise: a sensor 41 which determines a rotation speed of the rotor 31 of the first electro-pump 3, a sensor 42 for the temperature of the control electronics 32 of the first electro-pump 3, a measuring device 43 for measuring the current intensity at the input of the first electro-pump 3, a measuring device 44 for measuring the supply voltage of the first electro-pump 3, and a sensor 46 for the temperature of the cooling liquid in the tank 30.

The physical sensors of the first set also comprise a sensor 45 for detecting the pressure at a delivery of the first electro-pump 3. "Delivery" of the first electro-pump 3 is not understood as meaning exclusively an output opening of the first electro-pump 3, but also a high-pressure zone situated downstream of said output opening.

In order to define a mathematical relation which associates together the parameters of the first set the Applicant has established that at a predetermined working point (defined by the delivery pressure and flowrate) the current used by the first electro-pump 3 depends essentially on the viscosity of the oil which in turn depends on the temperature inside the oil sump.

The sensor 41 for the rotation speed of the rotor 31 of the first electro-pump 3 provides data relating to the processed flowrate of the first electro-pump 31. Based on this data it is possible to understand whether the use of a greater or smaller amount of electric current by the first electro-pump 3 is determined by a greater or smaller demand of the processed flowrate instead of by a variation in the temperature of the lubricating liquid. Similarly the sensor 45 for the pressure at the delivery of the first electro-pump 3 provides an indication as to whether the greater or smaller amount of electric current used by the first electric pump 3 is due to the greater or smaller amount of energy transferred to the lubricating liquid instead of a variation in the temperature thereof.

The same comments are applicable to the measuring device 44 for measuring the supply voltage of the first electro-pump 3. In fact, the voltage multiplied by the supply current defines the power used by the pump. The voltage sensor 44 provides an indication as to whether the greater or smaller amount of electric current used by the first electro-pump 3 is due to the greater or smaller amount of power used to transfer energy to the lubricating liquid instead of a variation in the temperature thereof. The sensor 42 for the temperature of the control electronics 32 of the first electro-pump 3 is an important parameter since it provides a value of the temperature in the vicinity of the oil sump. The Applicant has in fact established that typically the control electronics 32 are situated in the vicinity of the oil sump (advantageously the distance is less than 15 centimetres).

The step of calculating said first parameter depending on the remaining parameters of the first group comprises the step of applying the following formula:

$$T2: \ a \cdot (T1)^f + b \cdot (V1)^g + c \cdot P^h + d \cdot I^i + e \cdot V^l$$

in which:

V1 = rotation speed indicated by the sensor 41 for the speed of the rotor 31 of the first electro-pump 3;
P = pressure indicated by the pressure sensor 45 at the delivery of the first electro-pump 3;
T1 = temperature indicated by a temperature sensor 42 of the control electronics 32 of the first electric pump 3;
T2 = temperature of the lubricating liquid in the tank 30;
I = supply current determined by the measuring device 43 for measuring the current intensity at the input of the first electro-pump 3;
V = supply voltage determined by the measuring device 44 for measuring the supply voltage of the first electro-pump 3;
a, b, c, d, e, f, g, h, i, l = pre-set constants (real numbers).

The same mathematical relation may be reformulated in order to define in each case also the other parameters of the first group.

In general the predetermined constants a,...,l are to be defined experimentally depending on the specific electro-pump used and the system in which it is inserted, as explained in detail below. In order to determine these constants experimentally the person skilled in the art uses the vehicle 1 in which the first electro-pump 3 is incorporated. For the exact definition of the equation a set of six parameters (V1, P, T1, I, V, T2) which describe a precise operating point will be measured experimentally. This operation must be repeated several times at different operating points. The operation could be performed a minimum of 10 times, but it is recommended performing it at least 50 times. By increasing the number of experimental points available, a more precise formula may be obtained. In commerce software is available where, by inserting the experimental points, it is possible to determine an equation which has several unknown variables (in this case six) and correlates them (with a precise identification of the constants a, ....,l). An example of such software is the Matlab identification toolbox. Once available, this equation may be stored in a calculation unit 5 of the vehicle 1, which therefore will be used to calculate the first parameter of the first group.

In an alternative solution, the values measured and associated with each operating condition may be inserted in a memory unit of the apparatus 1.

A set of operating points, each described by six values associated with the experimental parameters (T2, T1, P, V1, I, V) may then be stored. The vehicle 1 comprises a calculation unit 5 which, depending on the input parameters provided by the physical sensors, performs an interpolation of the corresponding values of the set of operating points so as to produce an estimation of first parameter. Possible non-exclusive methods for the interpolation of a plurality of points each characterized by six variables, which are known to the person skilled in the art, may be: regression methods, pseudo-inverse matrix, neural networks, etc.

In the preferred solution the engine 2 is an electric motor.

Conveniently it comprises:

- rotating element 21;
- a stator 22.

The step of calculating the first parameter of the first group depending at least on the remaining parameters of the first group may be performed in a central ECU (calculation unit 5) or by means of interaction of several peripheral control units such as: the electronic control system 24 of the motor 2, the control electronics 32 of the first electro-pump 3, the control unit 81 of the second electro-pump 8.

A first approach for determining a mathematical relation which associates the parameters determined by means of the first set of sensors normally present in a vehicle 1 will be illustrated below. As will be explained in more detail below, this approach envisages upstream an operation of modelling the thermal performance of the system (motor, inverter, transmission, first electro-pump, cooling pump). The sensors involved must therefore allow a description of the thermal flows. The first set of sensors in this case comprises:

- a sensor 41 which determines a rotation speed of the rotor 31 of the first electro-pump 3;
- a sensor 42 for the temperature of the control electronics 32 of the first electro-pump 3;
- a measuring device 43 for measuring the current intensity at the input of the first electro-pump 3;
- a measuring device 44 for measuring the supply voltage of the first electro-pump 3.
- a sensor 46 for the temperature of the lubricating liquid in the tank 30;
- a sensor 62 for the current intensity at the input of the inverter 25 of the motor 2;
- a sensor 63 for the voltage at the input of the inverter 25 of the motor 2;
- a sensor 64 for the current intensity at the output of the inverter 25 of the motor 2;
- a sensor 65 for the voltage at the output of the inverter 25 of the motor 2;
- a sensor 66 for the temperature of the control system 24 of the motor 2;
- a sensor 67 for the temperature of the stator 22;
- a sensor 68 for measuring a movement speed of the vehicle 1;
- a sensor 69 which measures the ambient temperature outside the vehicle 1;
- a sensor 70 for the flowrate of a cooling fluid of the motor 2 and/or of the transmission means 23;
- a sensor (71) for the temperature of the cooling fluid in a predetermined position.

The first set of sensors may also comprise a sensor 61 for the resistance torque acting on the motor 2. For example it could be a torque meter. Alternatively this data could be determined indirectly as a measurement of several combined parameters.

For example the means 61 for determining the resistance torque could use the relation: $C=k_t \cdot I_f$ where

- C is the torque of the motor;
- kt is the torque constant of the electric motor (also comprising the transmission efficiency and the efficiency of the motor itself);
- If is the phase current of the motor (measured in this case also by a special sensor).

In a particular constructional solution the determination means 61 comprise an electronic unit which determines this data depending on the movement speed of the vehicle 1 (detected by a suitable sensor) and a signal emitted by a GPS sensor which indicates whether the road section which it is travelling along or is about to travel along is uphill (optionally indicating its gradient), downhill or flat.

The sensors of the first set have been carefully selected in order to involve sensors which are normally present on the vehicle 1 and therefore do not require additional costs.

In this case a calculation unit 5 of a vehicle 1 implements an equation having as input the values of the parameters of the first group which have been measured experimentally and indicated previously and as output the estimate of the first parameter.

A non-limiting example of an equation could be the following:

$$T2: a1 \cdot T1^{a2} + b1 \cdot V1^{b2} + d1 \cdot I^{d2} + e1 \cdot V^{e2} + f1 \cdot C^{f2} + g1 \cdot I1^{g2} + h1 \cdot V2^{h2} + i1 \cdot I2i2 + m1 \cdot V3^{m2} + n1 \cdot T3^{n2} + o1 \cdot T4^{o2} + p1 \cdot V5^{p2} + q1 \cdot T5^{q2} + r1 \cdot W^{r2} + s1 \cdot T6^{s2}$$

in which:

V1 = rotation speed indicated by the sensor 41 for the speed of the rotor 31 of the first electro-pump 3;
T1 = temperature indicated by a temperature sensor 42 of the control electronics 32 of the first electro-pump 3;
T2 = estimated temperature of the lubricating liquid in the tank 30;
I = supply current determined by the measuring device 43 for measuring the current intensity at the input of the first electro-pump 3;
V = supply voltage determined by the measuring device 44 for measuring the supply voltage of the first electro-pump 3;
C = the resistance torque acting on the motor 2 (measured or calculated);
I1 = input current of the inverter 25 of the motor 2 determined by the sensor 62;
V2 = voltage at the input of the inverter 25 of the motor 2 determined by the sensor 63;
I2 = current intensity at the output of the inverter 25 of the motor 2 determined by the sensor 64;
V3 = voltage at the output of the inverter 25 of the motor 2 determined by the sensor 65;
T3 = temperature of the control system 24 of the motor 2 determined by the sensor 66;

T4 = temperature of the stator 22 determined by the sensor 67;

V5 = speed of movement of the vehicle 1 determined by the sensor 68;

T5 = ambient temperature (outside the vehicle 1) determined by the sensor 69;

W = flowrate of a cooling fluid of the motor 2 and/or of the transmission means 23 determined by the sensor 70;

T6 = temperature of the cooling fluid in a position determined by the sensor 71;

a1, b1, d1, e1, f1, g1, h1, i1, m1, n1, o1, p1, q1, r1, s1, a2, b2, d2, e2, f2, g2, h2, i2, m2, n2, o2, p2, q2, r2, s2 are constants (defined by real numbers) to be defined depending on the specific components and the specific system.

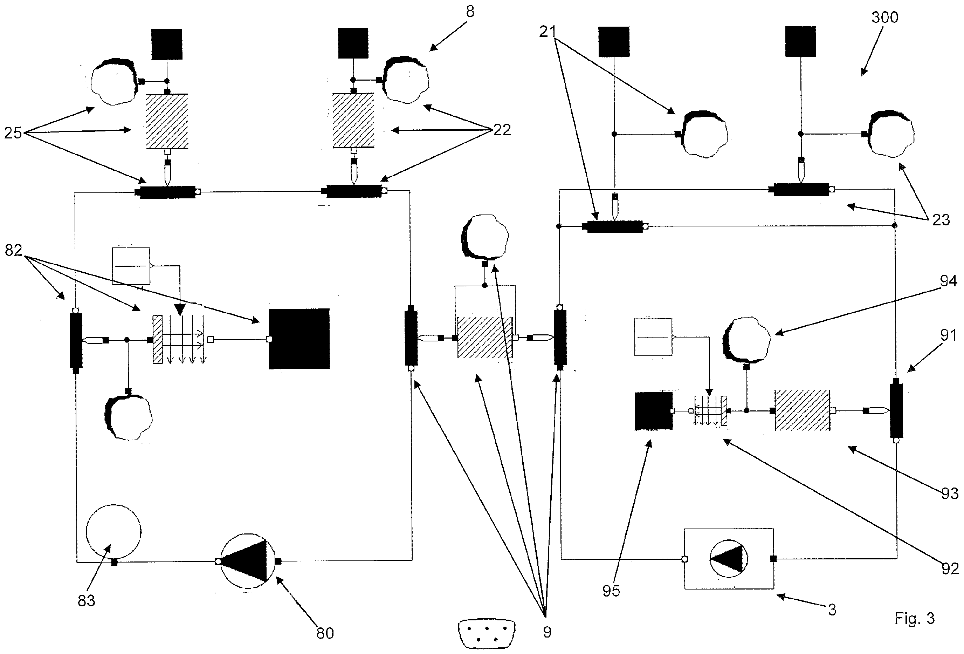

In order to determine these constants a thermal model described below with reference to Figure 3 may be used.

This model was implemented using the modelling software Dymola of the company Dessault Systèmes. The icons in Figure 3 may be easily recognized by the person skilled in the art who is familiar with this software. Each of these icons is associated with a standard component regulated by specific equations integrated within it.

As can be seen in Figure 3, the right-hand part shows in schematic form the circuit 300 of the lubricating liquid. It is important from a thermal point of view since it draws heat from components of the system. The left-hand side shows a cooling circuit 8 with the second electro-pump 80 and a pressure gauge 83 downstream. The two (lubricating and cooling) circuits are interfaced with each other by means of an exchanger indicated by the reference number 9 (thermal conductivity 331 W/(mk)). With reference to the lubricating liquid circuit downstream of the exchanger 9 it branches off and part of the lubricating liquid cools the rotating element 21 of the motor 2 and part of it cools the transmission means 23.

The lubricating liquid circuit also models the thermal performance of a housing 91 which surrounds at least the first electro-pump 3 and exchanges heat with the exterior. In particular the element 92 models the heat exchange due to convection with the external environment (the convection coefficient k is equal to 1 W/m$^2$K), the element 93 models the heat exchange due to conduction with the external environment (thermal conductivity 5W/(mK)), the element 95 defines at 293,15K the temperature of the external air.

With reference to the cooling circuit 8 it is pointed out that modelling is performed downstream of the heat exchanger 9 for the thermal performance of the external environment (in particular note the icons which schematically indicate the thermal capacity of the external environment and the convective heat exchange by means of a radiator 82) as well as the thermal performance provided by the inverter 25 (thermal conductivity 200W/(mK)) of the motor 2 and the stator 22 (thermal conductivity 200W/(mK)) of the motor 2. In fact the cooling fluid will also cool these components.

In the particular software used the stone-like icons (all those shaped like 94) schematically indicate the thermal capacity of a component. The rotor 31 will have a thermal capacity value of 500J/K, the transmission means 23 a value of 1000 J/K, the housing 91 a value of 10000 J/K, the radiator 82 a value of 2000 J/K, the inverter 25 a value of 1000 J/K, the stator 22 a value of 1000J/K, and the exchanger 9 a value of 2000J/K.

The icons with two parallel lines connected by a plurality of oblique lines illustrate instead the conductive heat exchange. The icons with intersecting horizontal and vertical arrows (such as 92) illustrate the convective heat exchange. In the case of the radiator 82 the convective coefficient k is equal to 100 W/m$^2$K. In this case the temperature of the air is fixed at 293,15K.

As input for this model it is possible to provide a progression, over a pre-coded time interval, of the following parameters: speed of the vehicle 1, resistance torque, current and supply voltage of the motor 2.

The thermal model described above calculates, depending on the inputs and the pre-coded equations (associated with the various components of the Dymola software model) the following outputs:

- speed of rotation of the rotor 31 of the first electro-pump 3;
- temperature of the control electronics 32 of the first electro-pump 3;
- estimated temperature of the lubricating liquid in the tank 30;
- current intensity at the input of the first electro-pump 3;
- supply voltage of the first electro-pump 3;
- resistance torque acting on the motor 2;
- current intensity at the input of the inverter 25 of the motor 2;
- voltage at the input of the inverter 25 of the motor 2;
- current intensity at the output of the inverter 25 of the motor 2;
- voltage at the output of the inverter 25 of the motor 2;
- temperature of the control system of the motor 2;
- temperature of the stator 22;
- speed of movement of the vehicle 1;
- ambient temperature (outside the vehicle 1);
- flowrate of a cooling fluid of the motor 2 and/or of the transmission means 23;
- temperature of the cooling fluid determined by the sensor 71 in a predetermined position.

By providing in addition a concrete physical solution of the system it is also possible to carry out, for the same inputs, experimental tests for measuring the values of given parameters (i.e. the aforementioned output parameters also supplied by the model). At this point the test results and the results of the model may be compared. This enables the thermal model described above to be optimized so that it resembles more closely the test results. Once the model has been optimized, it is possible to introduce different inputs (understood as being the progression, for a pre-coded time interval, of the following parameters: speed of the vehicle 1, resistance torque, voltage and supply current of the motor 2). In this way the values associated with said output parameters are obtained. These values may then be used (by running them through a suitable software of the type described above) to generate an equation, for example that described above, defining the values of the constants. It is therefore possible to provide a mathematical relation which links together the parameters of the first group. This mathematical relation may be used in the procedure according to the present invention to determine said first parameter, comparing it with the value measured experimentally. The procedure may be repeated, identifying as first parameter gradually all the other parameters of the first group and repeating the comparison with the values determined experimentally (so as to obtain confirmation of the correct operation of the sensors of the first set).

The present invention achieves some major advantages.

Firstly it is possible to check correct operation of a plurality of sensors which measure an operating parameter of the vehicle. Likewise this advantage may be obtained while minimizing the costs and avoiding the redundancy of physical sensors.

**Claims**

1. A control method for the correct operation of a vehicle (1) comprising the step of measuring a first group of parameters through physical sensors that define a first set of sensors; the vehicle (1) comprising:

   - said first set of sensors;
   - a motor (2);
   - transmission means (23) for transmitting the motion generated;
   - a first electro pump (3), said first electro pump (3) being a circulation electro pump for circulating a lubricating liquid (2) of the motor and/or of the transmission means (23) and comprising a rotor (31) that moves the lubricating liquid and a control electronics (32);
   - a lubricating liquid tank (30) from where the first circulation electro pump (3) draws the lubricating liquid;
   the vehicle (1) implementing a procedure comprising the steps of:

      i) calculating a first parameter of the first group according to at least the remaining parameters of the first group;
      ii) assessing the deviation between a value of the first parameter calculated in step i) and a value of the first parameter measured in said step of measuring said first group of parameters through the physical sensors;
      iii) detecting an anomaly if said deviation exceed a pre-set value;

   said physical sensors of the first set comprise: a sensor (41) that determines the rotation speed of the rotor (31) of the first electro pump (3), a temperature sensor (42) of the control electronics (32) of the first electro pump (3), a measuring device (43) for measuring the intensity of the input current in the first electro pump (3), a measuring device (44) for measuring the supply voltage of the first electro pump (3), a temperature sensor of the lubricating liquid in the tank (30).

2. The method according to claim 1, **characterised in that** said procedure is implemented at least twice, each time identifying as first parameter a different parameter of the first group.

3. The method according to any one of the preceding claims, **characterised in that** it implements a procedure at least a number of times equal to the number of parameters of the first group each time identifying as first parameter a different parameter of the first group.

4. The method according to any one of the preceding claims, **characterised in that** the step of calculating said first parameter according to at least the remaining parameters of the first group comprises calculating said first parameter exclusively according to the remaining parameters of the first group.

5. The method according to any one of the preceding claims, **characterised in that** each parameter of the first group is measured through a corresponding sensor, the number of sensors of the first set being equal to the number of parameters of the first group.

6. The method according to any one of the preceding claims, **characterised in that** said physical sensors of the first set comprise a pressure sensor (45) at a delivery of the first electro pump (3).

7. The method according to claim 6, **characterised in that** the step to calculate said first parameter according to the remaining parameters of the first group comprises the step of applying the following formula:

$$T2: a \cdot (T1)^f + b \cdot (V1)^g + c \cdot P^h + d \cdot I^i + e \cdot V^l$$

wherein:

V1: the rotation speed indicated by the sensor (41) of the speed of the rotor (31) of the first electro pump (3);
P: the pressure indicated by the pressure sensor (45) at the delivery of the first electro pump (3)
T1: the temperature indicated by a temperature sensor (42) of a control electronics (32) of the first electro pump (3);
T2: the temperature of the lubricating liquid in the tank (30);
I: the supply current determined by the measuring device (43) of the input current in the first electro pump (3);
V: the supply voltage determined by the measuring device (44) of the supply voltage of the first electro pump (3);
a, b, c, d, e, f, g, h, i, I: pre-set constants (real numbers).

8. The method according to any one of the preceding claims, **characterised in that** the motor (2) is an electric motor and comprises:

- a rotating element (21);
- a stator (22);
- an electronic control system (24);
- an inverter (25);
the vehicle (1) comprising movement means (20), the motor (2) being a driving motor for driving the movement means (20) of the vehicle (1);
said first set of sensors comprising:

- an intensity sensor (62) of the input current at the inverter (25) of the motor (2);
- a sensor (63) of the input voltage at the inverter (25) of the motor (2);
- an intensity sensor (64) of the output current from the inverter (25) of the motor (2);
- a sensor (65) of the voltage at the output of the inverter (25) of the motor (2);
- a temperature sensor (66) of the control system (24) of the motor (2);
- a temperature sensor (67) of the stator (22);
- a measure sensor (68) for measuring the movement speed of the vehicle (1);
- a sensor (69) measuring the ambient temperature outside the vehicle (1);
- a flow rate sensor (70) of a cooling fluid of the motor (2) and/or of the transmission means (23);
- a temperature sensor (71) of the cooling fluid in a predetermined position.

9. The method according to claim 8, **characterised in that** the first set of sensors comprises a sensor (61) of the resistance torque acting on the motor (2).

**Patentansprüche**

1. Verfahren zur Überwachung des korrekten Betriebs eines Fahrzeugs (1), umfassend den Schritt zum Messen einer ersten Gruppe von Parametern mittels physischer Sensoren, die eine erste Reihe von Sensoren definieren, wobei das Fahrzeug (1) Folgendes umfasst:

- die erste Reihe von Sensoren;
- einen Motor (2);

- Antriebsmittel (23) zur Übertragung der erzeugten Bewegung;
- eine erste Elektropumpe (3), wobei die erste Elektropumpe (3) eine Elektrozirkulationspumpe für das Zirkulieren einer Schmierflüssigkeit (2) des Motors und/oder der Antriebsmittel (23) ist und einen Rotor (31) umfasst, der die Schmierflüssigkeit bewegt, sowie eine Steuerungselektronik (32);
- einen Schmierflüssigkeitsbehälter (30), aus dem die erste Elektrozirkulationspumpe (3) die Schmierflüssigkeit ansaugt,

wobei das Fahrzeug (1) ein Verfahren durchführt, das die folgenden Schritte umfasst:

    i) Berechnen eines ersten Parameters der ersten Gruppe gemäß mindestens den restlichen Parametern der ersten Gruppe;
    ii) Beurteilen der Abweichung zwischen einem in Schritt i) berechneten Wert des ersten Parameters und eines Werts des ersten Parameters, der im Schritt zum Messen der ersten Gruppe von Parametern durch die physischen Sensoren gemessen wurde;
    iii) Erkennen eines Fehlers, wenn die Abweichung einen voreingestellten Wert überschreitet;

wobei die physischen Sensoren der ersten Reihe Folgendes umfassen: einen Sensor (41), der die Drehzahl des Rotors (31) der ersten Elektropumpe (3) ermittelt, einen Temperatursensor (42) der Steuerungselektronik (32) der ersten Elektropumpe (3), eine Messvorrichtung (43) zum Messen der Stärke des Eingangsstroms in der ersten Elektropumpe (3), eine Messvorrichtung (44) zum Messen der Versorgungsspannung der ersten Elektropumpe (3), einen Temperatursensor der Schmierflüssigkeit im Behälter (30).

2. Verfahren nach Anspruch 1, **dadurch gekennzeichnet, dass** das Verfahren mindestens zweimal durchgeführt wird, wobei jedes Mal als erster Parameter ein unterschiedlicher Parameter der ersten Gruppe identifiziert wird.

3. Verfahren nach einem der vorhergehenden Ansprüche, **dadurch gekennzeichnet, dass** es einen Ablauf mindestens einer der Zahl der Parameter der ersten Gruppe entsprechenden Male durchführt, wobei ein jedes Mal als erster Parameter ein unterschiedlicher Parameter der ersten Gruppe identifiziert wird.

4. Verfahren nach einem der vorhergehenden Ansprüche, **dadurch gekennzeichnet, dass** der Schritt zum Berechnen des ersten Parameters gemäß mindestens den restlichen Parametern der ersten Gruppe das Berechnen des Parameters ausschließlich gemäß den restlichen Parametern der ersten Gruppe umfasst.

5. Verfahren nach einem der vorhergehenden Ansprüche, **dadurch gekennzeichnet, dass** ein jeder Parameter der ersten Gruppe durch einen entsprechenden Sensor gemessen wird, wobei die Zahl der Sensoren der ersten Reihe gleich der Zahl der Parameter der ersten Gruppe ist.

6. Verfahren nach einem der vorhergehenden Ansprüche, **dadurch gekennzeichnet, dass** die physischen Sensoren der ersten Reihe einen Drucksensor (45) an einer Druckseite der ersten Elektropumpe (3) umfassen.

7. Verfahren nach Anspruch 6, **dadurch gekennzeichnet, dass** der Schritt zum Berechnen des ersten Parameters gemäß den restlichen Parametern der ersten Gruppe den Schritt zum Anwenden der folgenden Formel umfasst:

$$T2:\ a \cdot (T1)^f + b \cdot (V1)^g + c \cdot P^h + d\ I^i + e \cdot V^l$$

wobei Folgendes gilt:

V1: ist die vom Sensor (41) der Drehzahl des Rotors (31) der ersten Elektropumpe (3) angegebene Drehzahl;
P: ist der vom Drucksensor (45) an der Druckseite der ersten Elektropumpe (3) angegebene Wert;
T1: ist die von einem Temperatursensor (42) einer Steuerungselektronik (32) der ersten Elektropumpe (3) angegebene Temperatur;
T2: ist die Temperatur der Schmierflüssigkeit im Behälter (30);
I: ist der von der Messvorrichtung (43) des Eingangsstroms in der ersten Elektropumpe (3) ermittelte Speisestrom;
I: ist die von der Messvorrichtung (44) der Versorgungsspannung der ersten Elektropumpe (3) ermittelte Versorgungsspannung;
a, b, c, d, e, f, g, h, i, l: sind voreingestellte Konstanten (reelle Zahlen).

8. Verfahren nach einem der vorhergehenden Ansprüche, **dadurch gekennzeichnet, dass** der Motor (2) ein Elektromotor ist und Folgendes umfasst:

- ein Rotationselement (21);
- einen Stator (22);
- ein elektronisches Steuerungssystem (24);
- einen Wechselrichter (25),

wobei das Fahrzeug (1) Bewegungsmittel (20) umfasst, der Motor (2) ein Antriebsmotor zum Antreiben der Bewegungsmittel (20) des Fahrzeugs (1) ist,
wobei die erste Reihe von Sensoren Folgendes umfasst:

- einen Stärkesensor (62) des Eingangsstroms am Wechselrichter (25) des Motors (2);
- einen Sensor (63) der Eingangsspannung am Wechselrichter (25) des Motors (2);
- einen Stärkesensor (64) des Ausgangsstroms vom Wechselrichter (25) des Motors (2);
- einen Sensor (65) der Spannung am Ausgang des Wechselrichters (25) des Motors (2);
- einen Temperatursensor (66) des Steuerungssystems (24) des Motors (2);
- einen Temperatursensor (67) des Stators (22);
- einen Messsensor (68) zum Messen der Fahrgeschwindigkeit des Fahrzeugs (1);
- einen Sensor (69) zum Messen der Umgebungstemperatur außerhalb des Fahrzeugs (1);
- einen Durchflusssensor (70) des Kühlmediums des Motors (2) und/oder der Antriebsmittel (23);
- einen Temperatursensor (71) des Kühlmediums in einer vorgegebenen Position.

9. Verfahren nach Anspruch 8, **dadurch gekennzeichnet, dass** die erste Reihe von Sensoren einen Sensor (61) für das auf den Motor (2) wirkende Widerstandsmoment umfasst.

**Revendications**

1. Procédé de surveillance du fonctionnement correct d'un véhicule (1), comprenant l'étape de mesurer un premier groupe de paramètres à l'aide de capteurs physiques qui définissent un premier ensemble de capteurs ; le véhicule (1) comprenant :

- ledit premier ensemble de capteurs ;
- un moteur (2) ;
- des moyens de transmission (23) pour transmettre le mouvement généré ;
- une première électropompe (3), ladite première électropompe (3) étant une électropompe de circulation pour faire circuler un liquide de lubrification (2) du moteur et/ou des moyens de transmission (23) et comprenant un rotor (31) qui déplace le liquide de lubrification et une électronique de commande (32) ;
- un réservoir de liquide de lubrification (30) à partir duquel la première électropompe de circulation (3) aspire le liquide de lubrification ;
le véhicule (1) mettant en œuvre une procédure comprenant les étapes de :

i) calculer un premier paramètre du premier groupe en fonction d'au moins les paramètres restants du premier groupe ;
ii) évaluer l'écart entre une valeur du premier paramètre calculée à l'étape i) et une valeur du premier paramètre mesurée à ladite étape de mesurer dudit premier groupe de paramètres à travers les capteurs physiques ;
iii) détecter une anomalie si ledit écart dépasse une valeur prédéfinie ;

lesdits capteurs physiques du premier ensemble comprennent : un capteur (41) qui détermine la vitesse de rotation du rotor (31) de la première électropompe (3), un capteur de température (42) de l'électronique de commande (32) de la première électropompe (3), un dispositif de mesure (43) pour mesurer l'intensité du courant d'entrée dans la première électropompe (3), un dispositif de mesure (44) pour mesurer la tension d'alimentation de la première électropompe (3), un capteur de température du liquide de lubrification dans le réservoir (30).

2. Procédé selon la revendication 1, **caractérisé en ce que** ladite procédure est mise en œuvre au moins deux fois, chaque fois en identifiant comme premier paramètre un paramètre différent du premier groupe.

3. Procédé selon l'une quelconque des revendications précédentes, **caractérisé en ce qu'**il met en œuvre une procédure au moins un nombre de fois égal au nombre de paramètres du premier groupe identifiant chaque fois comme premier paramètre un paramètre différent du premier groupe.

4. Procédé selon l'une quelconque des revendications précédentes, **caractérisé en ce que** l'étape de calcul dudit premier paramètre selon au moins les paramètres restants du premier groupe comprend le calcul dudit premier paramètre exclusivement selon les paramètres restants du premier groupe.

5. Procédé selon l'une quelconque des revendications précédentes, **caractérisé en ce que** chaque paramètre du premier groupe est mesuré par l'intermédiaire d'un capteur correspondant, le nombre de capteurs du premier ensemble étant égal au nombre de paramètres du premier groupe.

6. Procédé selon l'une quelconque des revendications précédentes, **caractérisé en ce que** lesdits capteurs physiques du premier ensemble comprennent un capteur de pression (45) à une sortie de la première électropompe (3) .

7. Procédé selon la revendication 6, **caractérisé en ce que** l'étape de calcul dudit premier paramètre en fonction des paramètres restants du premier groupe comprend l'étape d'appliquer la formule suivante :

$$T2 \; : \; a \cdot (T1)^f \; + \; b \cdot (V1)^g + c \cdot P^h + d \; I^i + e \cdot V^l$$

dans laquelle :

V1 : la vitesse de rotation indiquée par le capteur (41) de la vitesse du rotor (31) de la première électropompe (3) ;
P : la pression indiquée par le capteur de pression (45) au refoulement de la première électropompe (3) ;
T1 : la température indiquée par un capteur de température (42) d'une électronique de commande (32) de la première électropompe (3) ;
T2 : la température du liquide de lubrification dans le réservoir (30) ;
I : le courant d'alimentation déterminé par le dispositif de mesure (43) du courant d'entrée dans la première électropompe (3) ;
V : la tension d'alimentation déterminée par le dispositif de mesure (44) de la tension d'alimentation de la première électropompe (3) ;
a, b, c, d, e, f, g, h, i, l : constantes prédéfinies (nombres réels).

8. Procédé selon l'une quelconque des revendications précédentes, **caractérisé en ce que** le moteur (2) est un moteur électrique et comprend :

- un élément rotatif (21) ;
- un stator (22) ;
- un système de commande électronique (24) ;
- un onduleur (25) ;

le véhicule (1) comprenant des moyens de déplacement (20), le moteur (2) étant un moteur d'entraînement pour entraîner les moyens de déplacement (20) du véhicule (1) ;
ledit premier ensemble de capteurs comprenant :

- un capteur d'intensité (62) du courant d'entrée au niveau de l'onduleur (25) du moteur (2) ;
- un capteur (63) de la tension d'entrée au niveau de l'onduleur (25) du moteur (2) ;
- un capteur d'intensité (64) du courant de sortie de l'onduleur (25) du moteur (2) ;
- un capteur (65) de la tension à la sortie de l'onduleur (25) du moteur (2) ;
- un capteur de température (66) du système de commande (24) du moteur (2) ;
- un capteur de température (67) du stator (22) ;
- un capteur de mesure (68) pour mesurer la vitesse de déplacement du véhicule (1) ;
- un capteur (69) mesurant la température ambiante à l'extérieur du véhicule (1) ;
- un capteur de débit (70) d'un fluide de refroidissement du moteur (2) et/ou des moyens de transmission (23) ;

- un capteur de température (71) du fluide de refroidissement dans une position prédéterminée.

9. Procédé selon la revendication 8, **caractérisé en ce que** le premier ensemble de capteurs comprend un capteur (61) du couple de résistance agissant sur le moteur (2).

Fig. 1

Fig. 2

Fig. 3

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0663520 A
- EP 3139068 A
- JP 2004112982 B